# EUROPÄISCHE PATENTSCHRIFT

(11) **EP 3 947 982 B1**
(45) Veröffentlichungstag und Bekanntmachung des Hinweises auf die Patenterteilung: **18.12.2024**
(21) Anmeldenummer: 20720357.1
(22) Anmeldetag: 31.03.2020
(51) Int. Cl.: F15B 15/14

(54) **KOLBENSTANGEN-EINHEIT, HYDRAULIKZYLINDER UND KNICKMAST**
PISTON ROD UNIT, HYDRAULIC CYLINDER AND ARTICULATED MAST
UNITÉ DE TIGE DE PISTON, VÉRIN HYDRAULIQUE ET MÂT ARTICULÉ

(30) Priorität: 01.04.2019 DE 102019108451
(43) Veröffentlichungstag der Anmeldung: 09.02.2022
(73) Patentinhaber: Schwing GmbH, 44653 Herne (DE)
(72) Erfinder: WILLING, Dirk, 48683 Ahaus (DE); OLEKSYUK, Mykola, 45527 Hattingen (DE)
(74) Vertreter: Schneiders & Behrendt Bochum
(86) Internationale Anmeldenummer: PCT/EP2020/059134
(87) Internationale Veröffentlichungsnummer: WO 2020/201289

(56) Entgegenhaltungen:
- EP-A1- 3 133 298
- WO-A1-2007/139384
- WO-A1-2014/124519
- WO-A2-02/052115
- DE-A1- 102017 110 393
- DE-B3- 10 317 619
- FR-A1- 2 224 659

## Beschreibung

Die Erfindung betrifft eine Kolbenstangen-Einheit für einen Hydraulikzylinder, mit wenigstens einem kolbenseitigen Endstück, und wenigstens einem stangenaugenseitigen Endstück, einer hohl ausgeführten Kolbenstange, die zwischen den Endstücken angeordnet ist, wobei sich ein in der Kolbenstange gebildeter Hohlraum zumindest bis in mindestens eines der Endstücke hinein erstreckt, sowie einen Hydraulikzylinder mit einer solchen Kolbenstangen-Einheit, und einen Knickmast eines Großmanipulators mit einem solchen Hydraulikzylinder.

Eine solche Kolbenstangen-Einheit ist aus DE 10 2013 008 351 B3 oder EP 1 346 157 B1 bekannt.

Aus WO 2007/139384 A1, FR 2 224 659 A1 und EP 3 133 298 A1 sind entsprechende Kolbenstangen-Einheiten bekannt, bei denen zusätzlich in den Hohlraum ein Stopfen eingesetzt ist, der die Kolbenstange und / oder ein Endstück hohlraumseitig stützt.

Zur Verringerung des Gewichts der Hydraulikzylinder sind die Kolbenstangen insbesondere bei Hydraulikzylindern an Verteilerknickmasten von Autobetonpumpen heute üblicherweise hohl gebohrt. Die noch verbleibende Wandungsstärke der hohlen Kolbenstangen ist dabei so ausgelegt, dass die erforderlichen Zug- und Druckkräfte von der Kolbenstange übertragen werden können. Insbesondere der Verbindungsbereich zwischen der hohlen Kolbenstange und dem stangenaugenseitigen Endstück mit der Bolzenaufnahme zum Anschluss der Kolbenstange an ein Mastsegment des Knickmastes ist hierbei ein kritischer Bereich, da sich das stangenaugenseitige Endstück bei den sehr hohen zu übertragenden Zug- und Druckkräften verformt und diese Verformung auch an den Verbindungsbereich mit der hohlen Kolbenstange übertragen wird. Dies führt zunächst zu einer elastischen Verformung der hohlen Kolbenstange im Verbindungsbereich, wobei sich diese Verformung insbesondere in einer Querschnittsveränderung des hohlen Kolbenstangenquerschnitts zeigt. Bei dauernder Überbeanspruchung ist nicht auszuschließen, dass im Übergangsbereich zwischen der hohlen Kolbenstange und dem Endstück Überlastungserscheinungen wie Risse entstehen und die gesamte Kolbenstange ausgetauscht werden muss.

Eine Erhöhung der Wandungsstärke in dem Verbindungsbereich, um eine Überlastung des hohlen Verbindungsbereiches auszuschließen, wäre die nächstliegende Lösung, allerdings würde sich hierdurch das Gewicht der Kolbenstange-Einheit erhöhen, obwohl diese erhöhte Wandungsstärke für die eigentliche Übertragung der Zug- und Druckkräfte nicht notwendig wäre. Neben den Anforderungen hinsichtlich des Gewichts sind die Möglichkeiten, den Verbindungsbereich zu verstärken, auch aufgrund des zur Verfügung stehenden Bauraumes begrenzt.

Es ist daher Aufgabe der Erfindung, eine verbesserte Kolbenstangen-Einheit anzugeben, die eine Verstärkung der hohl ausgeführten Kolbenstange ermöglicht, ohne dass das Gewicht der gesamten Einheit signifikant erhöht wird. Es sollen vor allem belastungsbedingte, elastische Verformungen der Kolbenstange und der Endstücke reduziert werden. Insbesondere sollen ein leichter Hydraulikzylinder und ein Knickmast mit reduziertem Gewicht angegeben werden.

Gelöst wird diese Aufgabe durch eine Kolbenstangen-Einheit mit den Merkmalen des Anspruchs 1 und des Anspruchs 5 sowie einen Hydraulikzylinder nach Anspruch 12 und einen Knickmast nach Anspruch 13.

Ein Aspekt der vorliegenden Erfindung ist durch eine Kolbenstangen-Einheit gemäß Anspruch 1 gegeben. Erfindungsgemäß ist hierbei vorgesehen, dass der Stopfen die Kolbenstange in einem Verbindungsbereich mit einem Endstück stützt, durch den sich der Hohlraum erstreckt. Mit der Abstützung des Verbindungsbereiches an dem in den Hohlraum eingesetzten Stopfen kann eine punktuelle Verstärkung des Verbindungsbereiches erreicht werden, in dem elastische Verformungen besonders kritisch sind, da diese hier schneller zu Rissen führen. Mit der Abstützung an dem Stopfen wird der Verbindungsbereich zwischen der hohlen Kolbenstange und dem Endstück gegen elastische Verformungen stabilisiert. Weiterhin ist erfindungsgemäß vorgesehen, dass im Verbindungsbereich zwischen der Kolbenstange und dem Endstück eine Schweißverbindung gebildet ist, wobei der Stopfen den Bereich der Schweißverbindung in Axialrichtung der Kolbenstange gesehen hohlraumseitig überdeckt. Mit der Überdeckung des Bereiches der Schweißverbindung in Axialrichtung der Kolbenstange kann eine elastische Verformung der Schweißverbindung zwischen dem Kolbenstange und dem Endstück im Verbindungsbereich durch die hohlraumseitige Abstützung des Stopfens wirksam verhindert werden, sodass keine Dauerschäden an der hier gebildeten Schweißnaht entstehen. Hierdurch kann auf einfache Weise eine Verstärkung der hohl ausgeführten Kolbenstange ermöglicht werden, ohne dass das Gewicht der gesamten Kolbenstangen-Einheit deutlich erhöht wird. So wird zur Verstärkung der hohl ausgebildeten Kolbenstange einfach ein Stopfen in den in der Kolbenstange gebildeten Hohlraum eingesetzt. Auch das Endstück, in das sich der in der Kolbenstange gebildete Hohlraum hinein erstreckt, kann durch das Einsetzen des Stopfens hohlraumseitig gestützt und somit verstärkt werden. Diese Verstärkung bewirkt, dass die elastische Verformung der hohlen Kolbenstange, die beispielsweise im Verbindungsbereich zwischen dem Endstück und der Kolbenstange auftritt, minimiert bzw. nahezu eliminiert wird und Dauerschäden damit verhindert werden können. Mit dem Stopfen lässt sich auf einfache Weise eine punktuelle Verstärkung der Kolbenstangen-Einheit erreichen, indem die Kolbenstange und oder das Endstück hohlraumseitig an dem in den Hohlraum eingesetzten Stopfen abgestützt werden.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Besonders bevorzugt ist eine Ausführungsform, die vorsieht, dass die Wandungsstärke der Kolbenstange in dem durch den Stopfen gestützten Verbindungsbereich die gleiche ist wie in den übrigen von dem Hohlraum durchsetzten Bereichen der Kolbenstange. Mit der gleichen Wandungsstärke der Kolbenstange sowohl in dem durch den Stopfen gestützten Verbindungsbereich als auch in den übrigen von dem Hohlraum durchsetzten Bereichen der Kolbenstange lässt sich das Gewicht der Kolbenstangen-Einheit effektiv reduzieren, wobei die punktuelle Verstärkung in dem durch den Stopfen gestützten Verbindungsbereich ausreicht, um elastische Verformungen der Kolbenstangen-Einheit soweit zu reduzieren, dass diese zu keinen Dauerschäden führen.

Eine besonders vorteilhafte Ausführung der Erfindung bezieht sich darauf, dass der Stopfen zweigeteilt aufgebaut ist, wobei ein erster Teil des Stopfens im Verbindungsbereich zwischen der Kolbenstange und dem Endstück angeordnet ist und ein zweiter Teil des Stopfens in dem Endstück angeordnet ist. Mit einer Teilung des Stopfens in mindestens zwei Stopfenteile können gezielt einzelne Bereiche der Kolbenstangen-Einheit hohlraumseitig gestützt werden. Mit dem ersten Teil des Stopfens wird bevorzugt der Verbindungsbereich zwischen der Kolbenstange und dem Endstück abgestützt, sodass hier belastungsbedingte, elastische Verformungen verhindert werden. Der zweite Teil des Stopfens hingegen kann in dem Endstück angeordnet sein und hier elastische Verformungen des Endstückes wirksam verhindern, indem dieses von dem Stopfenteil hohlraumseitig abgestützt wird.

Eine vorteilhafte Ausführung der Erfindung sieht vor, dass das stangenaugenseitige Endstück zwei seitlich abkragende Rohrstutzen aufweist, wobei der Stopfen zwischen den Rohrstutzen in dem hier fortgebildeten Hohlraum angeordnet ist. Mit der Anordnung des Stopfens zwischen den zwei seitlich abkragende Rohrstutzen des stangenaugenseitigen Endstücks kann eine wirksame Verstärkung erreicht werden, die eine Verformung des stangenaugenseitigen Endstücks reduziert. Mit einer Reduzierung der Verformung in den seitlich abkragenden Rohrstutzen des stangenaugenseitigen Endstückes werden auch die weiteren Verformungen der hohl ausgeführten Kolbenstange minimiert, da weniger Verformungen aus dem Endstück an die verbundene Kolbenstange übertragen werden.

Ferner ist ein weiterer Aspekt der vorliegenden Erfindung durch eine Kolbenstangen-Einheit gemäß Anspruch 5 gegeben. Die Anordnung des Stopfens zwischen den zwei seitlich abkragende Rohrstutzen des stangenaugenseitigen Endstücks bewirkt eine Verstärkung, die eine Verformung des stangenaugenseitigen Endstücks reduziert. Über die Reduzierung der Verformung in den seitlich abkragenden Rohrstutzen des stangenaugenseitigen Endstückes werden auch die weiteren Verformungen der hohl ausgeführten Kolbenstange minimiert, da weniger Verformungen aus dem Endstück an die verbundene Kolbenstange übertragen werden.

Besonders vorteilhaft ist eine Ausführungsform, die vorsieht, dass der Stopfen eine Durchgangsbohrung aufweist, durch die ein Gelenkbolzen am stangenausgenseitigen Endstück geführt ist. Mit der Durchführung des Gelenbolzens durch den Stopfen kann an dem stangenausgenseitigen Endstück eine wirksame Führung des Gelenkbolzens erreicht werden, wodurch zum einen die Verformungen des Bolzens minimiert werden und zum anderen der Stopfen in dem stangenausgenseitigen Endstück einfach festgelegt ist.

Eine vorteilhafte Ausgestaltung sieht vor, dass der Stopfen aus dem gleichen Material wie die Kolbenstange, vorzugsweise Stahl, besteht. Da die hohle Kolbenstange durch den Stopfen nur punktuell verstärkt wird, ergibt sich, gegenüber einer massiven Kolbenstange aus dem gleichen Material immer noch ein erheblicher Gewichtsvorteil durch die Verwendung eines entsprechenden Stopfens. Vorzugsweise ist der Stopfen aus Stahl hergestellt, da dieser Werkstoff eine hohe Druckfestigkeit aufweist.

Gemäß einer bevorzugten Ausgestaltung der Erfindung ist vorgesehen, dass der Stopfen zumindest teilweise aus Leichtmetall, vorzugsweise Aluminium besteht. Mit der Verstärkung der Kolbenstangen-Einheit durch einen Stopfen aus einem Leichtmetall ist eine punktuelle Abstützung möglich, ohne dass das Gewicht der Kolbenstangen-Einheit signifikant erhöht wird. Bevorzugt ist der Stopfen aus Aluminium hergestellt, da dieser Werkstoff eine hohe Druckfestigkeit und ein geringes spezifisches Gewicht aufweist. Das spezifische Gewicht von Aluminium beträgt ca. ein Drittel des spezifischen Gewichtes von Stahl, damit ist eine sehr effektive Erhöhung der Steifigkeit in hoch belasteten Bereichen der Kolbenstangen-Einheit möglich, obwohl das Gesamtgewicht der Kolbenstangen-Einheit durch den Stopfen nur unwesentlich erhöht wird. Der Stopfen kann auch aus einem anderen steifen Werkstoff bestehen, der eine ausreichende Druckfestigkeit aufweist.

Besonders vorteilhaft ist eine Ausführungsform, die vorsieht, dass mindestens ein ringförmiges Dichtungselement eine Abdichtung zwischen dem Stopfen und einer Innenwand des Hohlraums bewirkt. Damit kein Schmutz von außen in das stangenaugenseitige Gelenklager eindringen kann und kein Fett von der Schmierung des Gelenkbolzens in die hohle Kolbenstange gelangen kann, sind zwischen dem Stopfen und einer Innenwand des Hohlraums ringförmige Dichtungselemente zur Abdichtung vorgesehen. Die ringförmigen Dichtungselemente können in Nuten, welche vorzugsweise in den Stopfen eingedreht sind, aufgenommen werden. Die Dichtungselemente sind bevorzugt als O-Ringe ausgebildet.

Eine vorteilhafte Ausgestaltung sieht vor, dass der Stopfen über eine kopfseitige Verschraubung an dem den Hohlraum aufweisenden Endstück verschraubt ist. Über die kopfseitige Verschraubung kann der Stopfen in dem Endstück einfach im Hohlraum festgelegt werden. Die kopfseitige Verschraubung umfasst bevorzugt eine Halteplatte, die mit dem Stopfen kopfseitig verschraubt ist und an dem Endstück über Schraubverbindungen befestigt ist.

Eine besonders vorteilhafte Ausführung der Erfindung sieht vor, dass der Stopfen an einem im Hohlraum gebildeten Absatz abgestützt ist. Mit der Abstützung des Stopfens an einem im Hohlraum gebildeten Absatz kann eine einfache Festlegung des Stopfens in dem Hohlraum erreicht werden. An dem Absatz kann sich der Stopfen einfach abstützen und so an einer festgelegten Position im Hohlraum eine hohlraumseitige Abstützung von Kolbenstange und Endstück ermöglichen.

Ferner ist Gegenstand der Erfindung ein Hydraulikzylinder mit einer wie zuvor und im Folgenden näher beschriebenen Kolbenstangen-Einheit. Ein mit einer solchen Kolbenstangen-Einheit ausgestatteter Hydraulikzylinder weist neben einem geringeren Gewicht eine hohe Belastungsfähigkeit auf, da die mit dem Stopfen punktuell verstärkte Kolbenstangen-Einheit größere Kräfte aufnehmen kann, ohne dass ihr Gewicht durch den Stopfen signifikant erhöht wird.

Außerdem ist Gegenstand der Erfindung ein Knickmast eines Großmanipulators, insbesondere einer Autobetonpumpe, mit einer Mehrzahl von Mastsegmenten, wobei die Mastsegmente an Knickgelenken jeweils um Knickachsen gegenüber einem benachbarten Mastsegment oder einem Schemel verschwenkbar sind, wobei zumindest ein wie zuvor und im Folgenden näher beschriebener Hydraulikzylinder eine Verschwenkungbewegung in zumindest einem Knickgelenk bewirkt.

Die Anforderungen an die Mastlänge, d.h. an die Reichweite der Knickmasten von Großmanipulatoren wie Autobetonpumpen, wächst ständig. Um das Eigengewicht der Knickmasten insgesamt möglichst gering zu halten, sind besonders leichte Hydraulikzylinder von Vorteil. Die Verwendung von leichten Hydraulikzylindern spart Eigengewicht bei den Knickmasten ein, sodass höhere Reichweiten möglich sind.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1:: Großmanipulator mit erfindungsgemäßem Knickmast,
- Figur 2:: erfindungsgemäßer Hydraulikzylinder,
- Figur 3:: erfindungsgemäße Kolbenstangen-Einheit,
- Figur 4:: Schnittansicht der Kolbenstangen-Einheit,
- Figur 5:: Detailschnittansicht bei Druckbelastung an einer Kolbenstangen-Einheit gemäß dem Stand der Technik,
- Figur 6:: Detailschnittansicht einer erfindungsgemäßen Kolbenstangen-Einheit,
- Figur 7:: erfindungsgemäße Kolbenstangen-Einheit mit Stopfen und
- Figur 8:: Detailschnittansicht der erfindungsgemäßen Kolbenstangen-Einheit mit zweigeteiltem Stopfen.

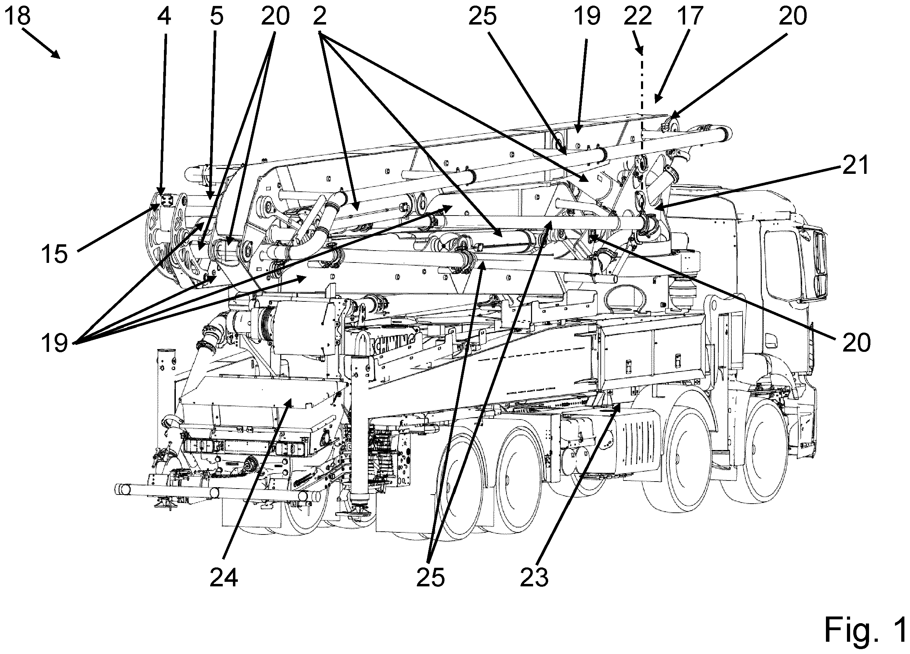

In der Figur 1 mit dem Bezugszeichen 17 bezeichnet ist ein erfindungsgemäßer Knickmast 17 an einem als Autobetonpumpe ausgebildeten Großmanipulator 18 dargestellt. Der Knickmast 1 ist auf einem um eine Hochachse 22 drehbaren Drehschemel 21 aufgebaut, der den Knickmast 17 gegenüber dem Fahrgestell 23 des Großmanipulators 18 drehbar und verschwenkbar über ein Knickgelenk 20 aufnimmt. Der Knickmast 17 verfügt über mehrere Mastsegmente 19, welche in Knickgelenken 20 jeweils um Knickachsen gegenüber einem benachbarten Mastsegment 19 oder dem Drehschemel 21 verschwenkbar sind. Zur Verschwenkung der Mastsegmente 19 sind den Knickgelenken 20 jeweils Hydraulikzylinder 2 zugeordnet, welche die Verschwenkbewegung der Mastsegmente 19 in den Knickachsen bewirken. Über diese Schwenkbewegung kann der in Figur 1 zusammengefaltet dargestellte Knickmast 17 ausgefaltet werden. Im ausgefalteten Zustand des Knickmastes 17 kann über den Aufgabetrichter 24 aufgegebener, flüssiger Beton mittels einer Dickstoffpumpeneinheit in der Autobetonpumpe durch die am Knickmast 17 angeordneten Betonförderleitungen 25 innerhalb der Reichweite des Knickmastes 17 zur Verwendungsstelle auf der Baustelle gefördert werden.

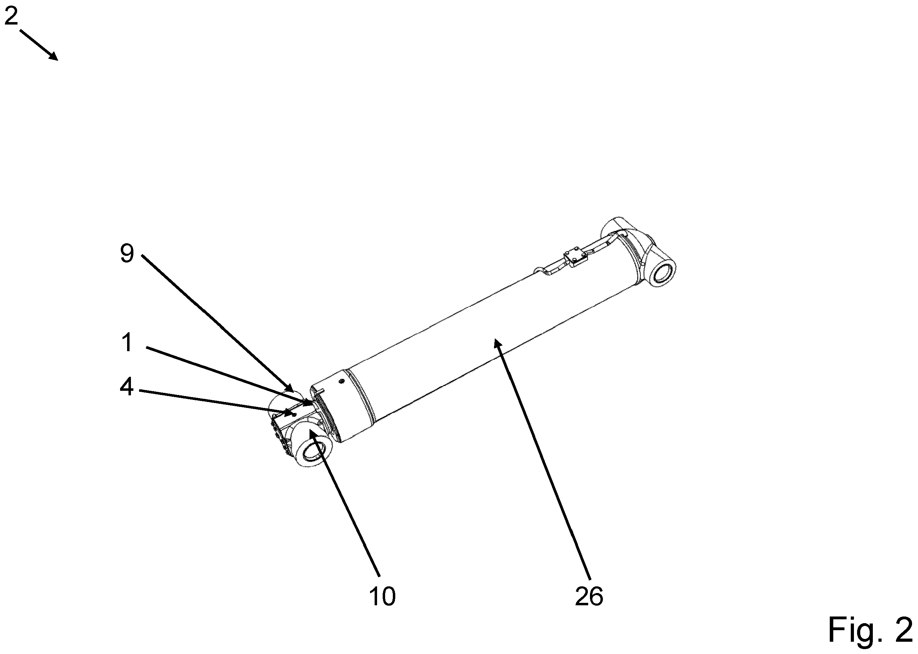

Die Figur 2 zeigt einen erfindungsgemäßen Hydraulikzylinder 2, wie er in Figur 1 den Knickgelenken 20 des Knickmastes 17 zugeordnet ist, in einer Einzelansicht. Bei dieser Einzelansicht ist die Kolbenstangen-Einheit 1 in den Zylinderkörper 26 des Hydraulikzylinders 2 eingefahren dargestellt, sodass nur das stangenaugenseitige Endstück 4 aus dem Zylinderkörper 26 herausragt.

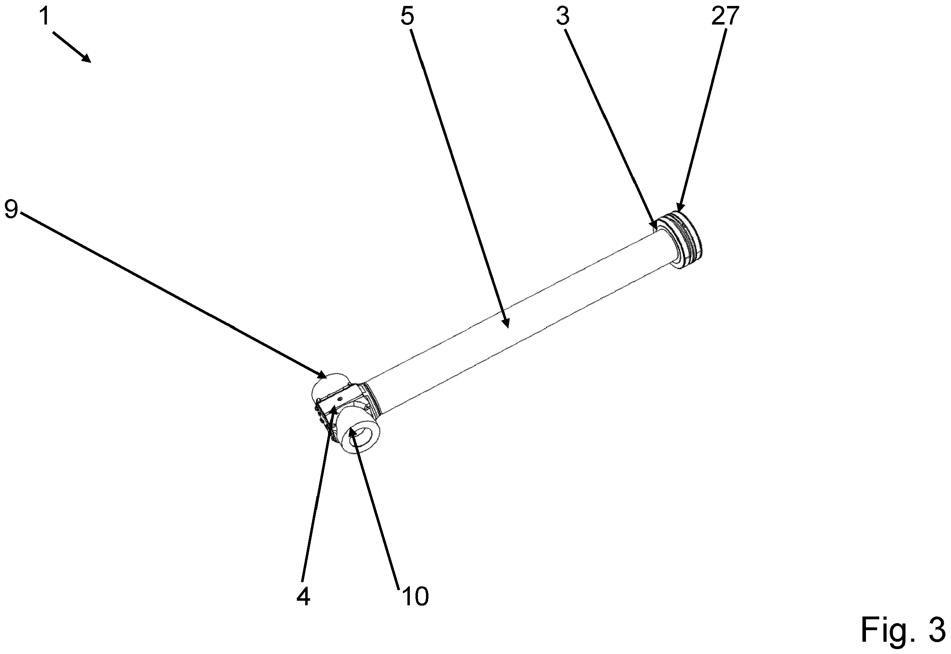

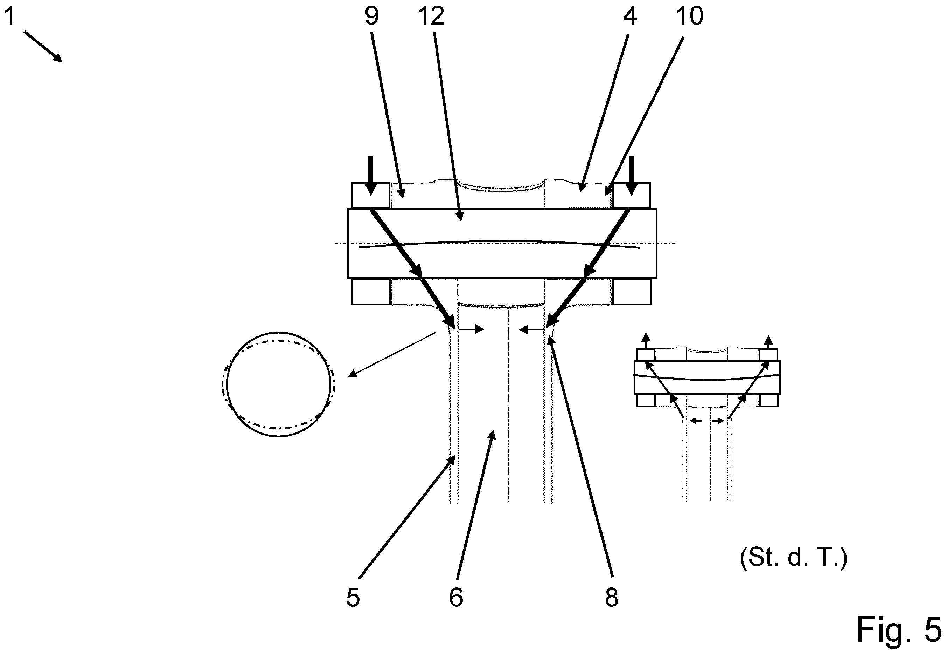

Mit Figur 3 ist eine Einzelansicht auf die Kolbenstangen-Einheit 1 gemäß Figur 2 gegeben. Diese erfindungsgemäße Kolbenstangen-Einheit 1 verfügt über ein kolbenseitiges Endstück 3, an dem ein Kolben 27 angeordnet ist. Weiterhin verfügt die Kolbenstangen-Einheit 1 über ein stangenaugenseitiges Endstück 4. Das stangenaugenseitige Endstück 4 weist zwei seitlich abkragende Rohrstutzen 9, 10 auf. In diesen Rohrstutzen 9, 10 wird ein Gelenkbolzen 12 (Fig. 5) zur Verbindung des Hydraulikzylinders 2 mit einem Mastsegment 19 geführt. Die Endstücke 3, 4 der Kolbenstangen-Einheit 1 sind über eine Kolbenstange 5 miteinander verbunden.

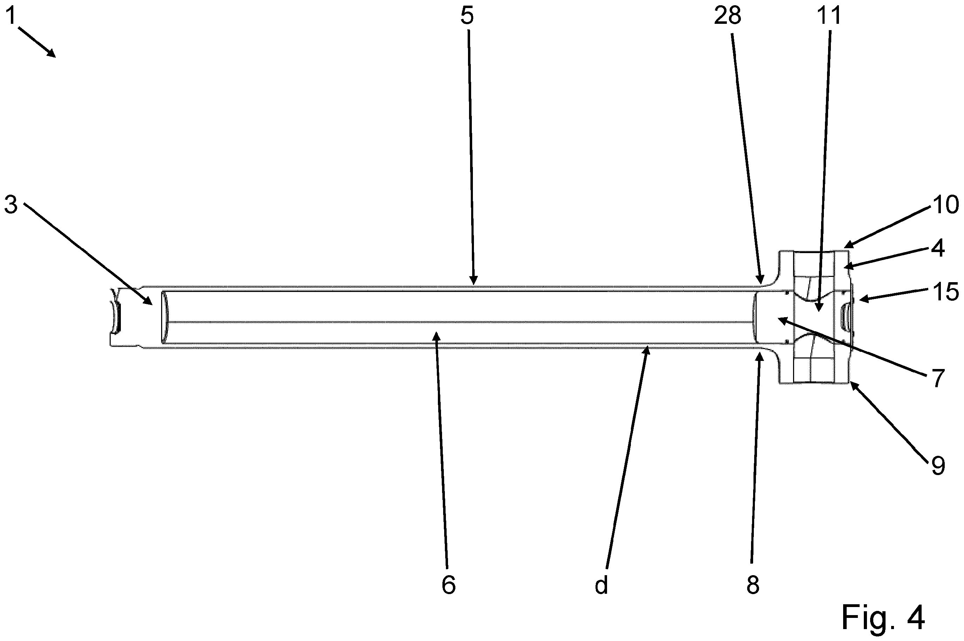

Die Figur 4 zeigt die Kolbenstangen-Einheit 1 gemäß Figur 3 in einer Schnittansicht. Mit dieser Schnittansicht ist ein Blick in die hohl ausgeführte Kolbenstange 5 der Kolbenstangen-Einheit 1 möglich. In dieser Darstellung gut zu erkennen ist, dass der in der Kolbenstange 5 gebildete Hohlraum 6 sich zumindest bis in das stangenaugenseitige Endstück 4 hinein erstreckt. In dem Verbindungsbereich 8 zwischen Kolbenstange 5 und Endstück 4 ist eine Schweißverbindung 28 angedeutet, mit welcher die Kolbenstange 5 mit dem Endstück 4 verbunden ist. Die Kolbenstange 5 weist in dem Verbindungsbereich 8 die gleiche Wandungsstärke d auf, wie in den übrigen von dem Hohlraum 6 durchsetzten Bereichen der Kolbenstange 5. Wie in Figur 4 weiter zu erkennen ist, verfügt die Kolbenstangen-Einheit 1 über einen Stopfen 7, der in den Hohlraum 6 eingesetzt ist und die Kolbenstange 5 und das stangenaugenseitige Endstück 4 hohlraumseitig, d.h. von innen her abstützt. Der Stopfen 7 ragt in den Hohlraum 6 soweit in die Kolbenstange 5 hinein, dass der Verbindungsbereich 8 der Kolbenstange 5 mit dem Endstück 4 von dem Stopfen 7 abgestützt wird. Damit stützt der Stopfen 7 den Verbindungsbereich 8 ab, in dem die Kolbenstange 5 die gleiche Wandungsstärke d wie in den übrigen von dem Hohlraum 6 durchsetzten Bereichen aufweist. Hierdurch ist eine punktuelle Verstärkung des Verbindungsbereiches 8 zwischen der hohl ausgeführten Kolbenstange 5 und dem stangenaugenseitigen Endstück 4 durch den im Hohlraum 6 eingesetzten Stopfen 7 ermöglicht. Mit der punktuellen Verstärkung werden insbesondere elastische Verformungen im Bereich der Schweißverbindung 28 zwischen Kolbenstange 5 und Endstück 4 verhindert. Hierzu überdeckt der Stopfen 7 den Bereich der Schweißverbindung 28 in Axialrichtung der Kolbenstange 5 gesehen hohlraumseitig. Wie in Figur 4 weiter zu erkennen ist, ist der Stopfen 7 zwischen den Rohrstutzen 9, 10 des Endstückes 4 in dem hier fortgebildeten Hohlraum 6 angeordnet. Zur Bildung des Hohlraumes 6 in der hohl ausgeführten Kolbenstange 5 und zur hohlraumseitigen Bearbeitung der Schweißnaht 28 zwischen der hohl ausgeführten Kolbenstange 5 und dem stangenaugenseitigen Endstück 4 ist der Hohlraum 6 zwischen den beiden Rohrstutzen 9, 10 des Endstückes 4 zugänglich. Von diesem Zugang aus wird der Stopfen 7 in den Hohlraum 6 eingesetzt. Der Hohlraum 6, beziehungsweise die hohl ausgeführte Kolbenstange 5 und das Endstück 4, können an der Innenseite glatt abgedreht oder gebohrt sein und der Durchmesser des Stopfens 7 ist vorzugsweise auf Passung bearbeitet, so dass, der Stopfen 7 einfach eingesetzt werden kann. Damit wird die Kolbenstange 5, beziehungsweise der Verbindungsbereich 8, ausreichend von Innen, also hohlraumseitig, stabilisiert. Über eine kopfseitige Verschraubung 15 wird der Stopfen 7 an dem stangenaugenseitigen Endstück 4 hiernach verschraubt. Auf diese Weise ist die Position des Stopfens 7 im Endstück 4 auf einfache Weise festgelegt. Der Stopfen 6 kann auch durch den Gelenkbolzen 12 alleine in seiner Position gehalten werden. Nach dem Lösen der Verschraubung 15, beziehungsweise dem Entfernen des Gelenkbolzens 12, kann der Stopfen 7 einfach wieder aus dem Hohlraum 6 entnommen werden. Der Stopfen 7 ist also aus dem Hohlraum 6 wieder entnehmbar ausgestaltet. Damit kann die Kolbenstangeneinheit 1 nach längerem Betrieb des Hydraulikzylinders 2 auch an/von der Innenseite aus, also hohlraumseitig, auf Schäden überprüft werden.

Zudem kann die Kolbenstangeneinheit 1, je nach erwarteter Belastung, mit oder ohne den Stopfen 7 gefertigt oder der Stopfen 7 auch nachträglich einfach eingebaut werden.

Die Figur 5 zeigt eine Detailschnittansicht einer Kolbenstangen-Einheit 1 gemäß Stand der Technik bei Druckbelastung auf den Gelenkbolzen 12. Die vom Gelenkbolzen 12 in das Endstück eingeleiteten Kräfte sind als vertikale Blockfeile angedeutet, die letztendlich eine Verformung des Gelenkbolzens 12 und des Endstückes 4 mit den abkragenden Rohrstutzen 9, 10 bewirken. Diese Verformungen führen zu einer Verformung der hohl ausgeführten Kolbenstange 5 im Verbindungsbereich 8 zwischen Kolbenstange 5 und Endstück 4, welche durch horizontal verlaufende Pfeile angedeutet ist. Der Kraftverlauf bei der Druckbelastung ist durch weitere schräg verlaufende Blockfeile angedeutet. Bei einer Zugbelastung auf den Gelenkbolzen 12 (unten rechts angedeutet) verformt sich dieser entgegengesetzt, was zu einer entsprechend entgegengesetzten Verformung des Endstückes 4 führt. Diese entgegengesetzte Verformung setzt sich über den Verbindungsbereich 8 auch in der hohl ausgeführten Kolbenstange 5 fort. Die gegensätzlichen Verformungen führen langfristig zu Materialermüdung, schlimmstenfalls zum Bruch der Verbindung zwischen Endstück 4 und Kolbenstange 5.

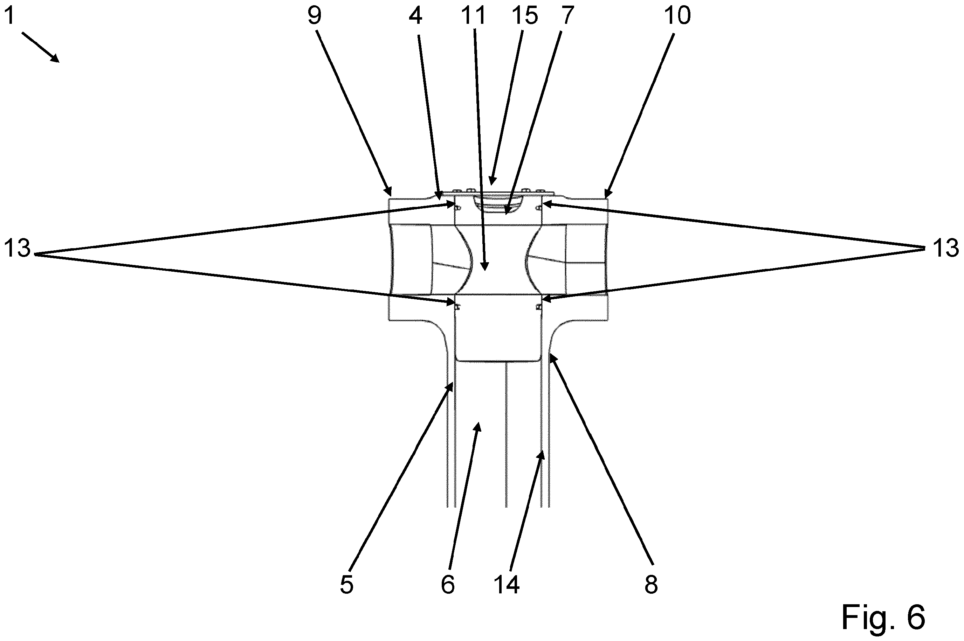

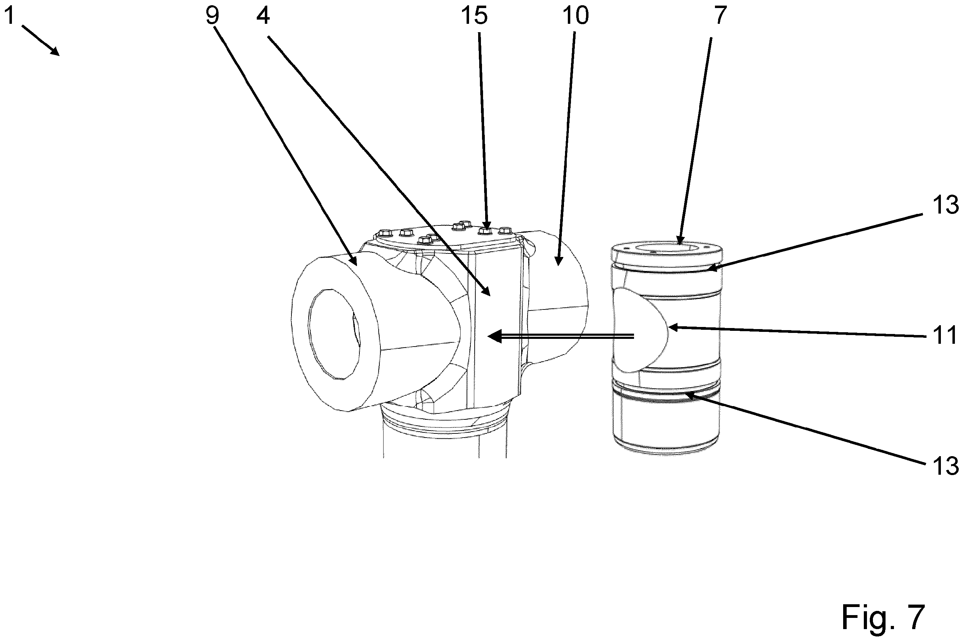

Die Figur 6 stellt eine Detailschnittansicht durch die erfindungsgemäße Kolbenstangen-Einheit 1 aus Figur 4 dar. Der in den Hohlraum 6 eingesetzte Stopfen 7 ist in Figur 7 zusätzlich perspektivisch in einer Einzelansicht zu sehen. In dieser Einzelansicht gut ersichtlich ist, dass der Stopfen 7 über eine Durchgangsbohrung 11 verfügt durch die der Gelenkbolzen 12 (Fig. 5) am stangenausgenseitigen Endstück 4 geführt ist. Hierzu wird der Stopfen 7, wie in Figur 6 ersichtlich, so in den Hohlraum 6 eingesetzt, dass die Durchgangsbohrung 11 mit den seitlich abkragenden Rohrstutzen 9, 10 fluchtend angeordnet ist. In diese fluchtende Anordnung kann der Gelenkbolzen 12 (Fig. 5) am stangenausgenseitigen Endstück 4 geführt werden. Die fluchtende Anordnung des Stopfens 7 wird auch über die kopfseitige Verschraubung 15 des Stopfens 7 an dem stangenaugenseitigen Endstück 4 sichergestellt. Zwischen dem Stopfen 7 und der Innenwand 14 des Hohlraumes 6 sind ringförmige Dichtungselemente 13 vorgesehen, die eine Abdichtung zwischen dem Stopfen 7 und Hohlraumwand 14 bewirken. Mit dem ersten, oberen Dichtungselement 13 wird verhindert, dass Schmutz von außen in das stangenaugenseitige Gelenklager eindringen kann. Das zweite, untere Dichtungselement 13 verhindert, dass Fett von der Schmierung des Gelenkbolzens 12 (Fig. 5) in die hohle Kolbenstange 5 gelangen kann. Die ringförmigen Dichtungselemente 13 sind in Nuten angeordnet, welche in den Stopfen eingedreht sind. Bei den ringförmigen Dichtungselementen 13 handelt es sich um O-Ringe.

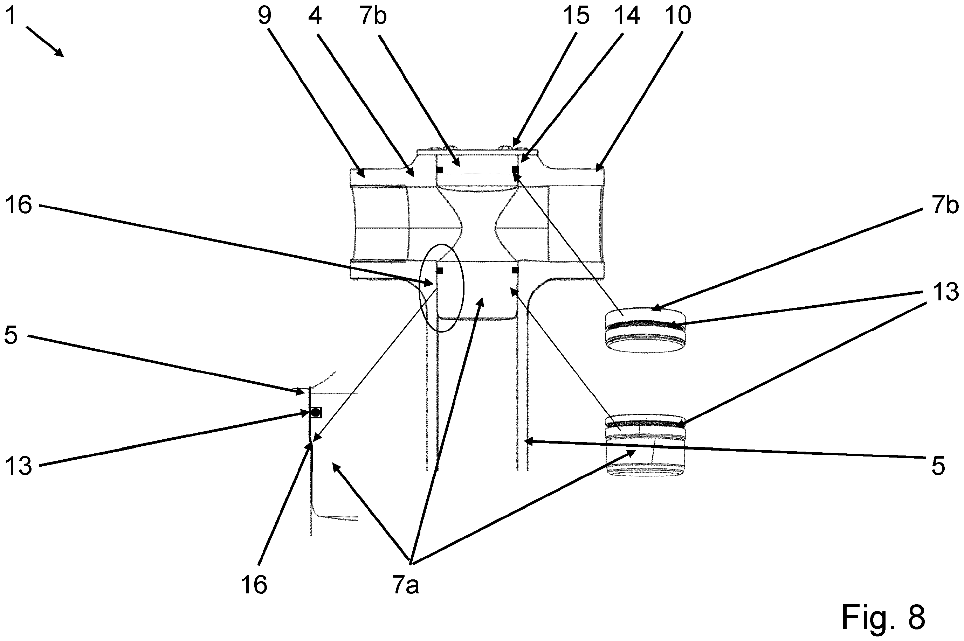

Aus Figur 8 geht eine Ausführungsform hervor, bei welcher der Stopfen 7a, 7b zweigeteilt aufgebaut ist. Ein erster Teil 7a des Stopfens 7 ist im Verbindungsbereich 8 zwischen der Kolbenstange 5 und dem stangenseitigen Endstück 4 angeordnet. Der zweite Teil 7b des Stopfens 7 ist nur in dem Endstück 4 angeordnet. Die Teilung des Stopfens 7 in die zwei Stopfenteile 7a, 7b ermöglich eine gezielte hohlraumseitige Abstützung einzelner Bereiche der Kolbenstangen-Einheit 1. Der erste Teil 7a des Stopfens 7 stützt den Verbindungsbereich 8 zwischen der Kolbenstange 5 und dem stangenausgenseitigen Endstück 4 so ab, dass hier belastungsbedingte, elastische Verformungen, insbesondere durch Druckbelastungen des Gelenkbolzens 12 (Fig. 5), verhindert werden. Der zweite Teil 7b des Stopfens 7 hingegen verhindert durch seine Anordnung im Endstück 4 elastische Verformungen des Endstückes 4 bei Zugbelastungen auf den Gelenkbolzen 12 (Fig. 12) wirksam, indem dieses von dem Stopfenteil 7b hohlraumseitig abgestützt wird. Der Stopfen 7 oder die Stopfenteile 7a, 7b sind nicht kraftschlüssig mit der hohlen Kolbenstange 5 verbunden, das heißt insbesondere, dass nicht vorgesehen ist, dass der Stopfen 7, 7a, 7b selbst Zugkräfte überträgt. Die Zugkräfte werden, wie bisher, nur über die hohle Kolbenstange 5 übertragen. In Figur 8 ist zudem ein kleiner Absatz 16 zu erkennen, der in dem Hohlraum 6 gebildet ist und den unteren Stopfenteil 7a abstützt. Hierdurch ist das untere Stopfenteil 7a in dem Hohlraum 6 der Kolbenstange 5 festgelegt. Die Ausführungsform des zweigeteilten Stopfens 7a, 7b eignet sich besonders für kleine Hydraulikzylinder, weil der Bereich der Bolzendurchführung nicht genügend Material aufweist für eine Durchgangsbohrung 11 (Fig. 7).

Neben der gezeigten Abstützung des stangenausgenseitigen Endstückes 4 und des Verbindungsbereichen 8 zwischen dem stangenaugenseitigen Endstück 4 und der hohl ausgeführten Kolbenstange 5, kann der Stopfen 7, 7a, 7b auch zur Abstützung des kolbenseitigen Endstückes 3 und des Verbindungsbereiches zwischen dem kolbenseitigen Endstück 3 und der hohl ausgeführten Kolbenstange 5 eingesetzt werden.

### Bezuaszeichenliste

- 1: Kolbenstangen-Einheit
- 2: Hydraulikzylinder
- 3: kolbenseitiges Endstück
- 4: stangenaugenseitiges Endstück
- 5: Kolbenstange
- 6: Hohlraum
- 7: Stopfen, 7a, 7b Stopfenteile
- 8: Verbindungsbereich
- 9: Erster Rohrstutzen
- 10: Zweiter Rohrstutzen
- 11: Durchgangsbohrung
- 12: Gelenkbolzen
- 13: Dichtungselement
- 14: Innenwand
- 15: kopfseitige Verschraubung
- 16: Absatz
- 17: Knickmast
- 18: Großmanipulator
- 19: Mastsegment
- 20: Knickgelenk
- 21: Schemel
- 22: Hochachse
- 23: Fahrgestell
- 24: Aufgabetrichter
- 25: Betonförderleitung
- 26: Zylinderkörper
- 27: Kolben
- 28: Schweißverbindung
- d: Wandungsstärke

## Patentansprüche

1. Kolbenstangen-Einheit (1) für einen Hydraulikzylinder (2), mit
- wenigstens einem kolbenseitigen Endstück (3), und
- wenigstens einem stangenaugenseitigen Endstück (4),
- einer hohl ausgeführten Kolbenstange (5), die zwischen den Endstücken (3, 4) angeordnet ist, wobei sich ein in der Kolbenstange (5) gebildeter Hohlraum (6) zumindest bis in mindestens eines der Endstücke (3, 4) hinein erstreckt, wobei in den Hohlraum (6) ein Stopfen (7, 7a, 7b) eingesetzt ist, der die Kolbenstange (5) und / oder eines der Endstücke (3, 4) hohlraumseitig stützt, wobei der Stopfen (7, 7a, 7b) die Kolbenstange (5) in einem Verbindungsbereich (8) mit dem einen der Endstücke (3, 4) stützt, durch den sich der Hohlraum (6) erstreckt, wobei im Verbindungsbereich (8) zwischen der Kolbenstange (5) und dem einen der Endstücke (3, 4) eine Schweißverbindung gebildet ist, **dadurch gekennzeichnet, dass** der Stopfen (7, 7a, 7b) den Bereich der Schweißverbindung in Axialrichtung der Kolbenstange (5) gesehen hohlraumseitig überdeckt.

2. Kolbenstangen-Einheit (1) nach Anspruch 1, **dadurch gekennzeichnet, dass** die Wandungsstärke (d) der Kolbenstange (5) in dem durch den Stopfen (7, 7a, 7b) gestützten Verbindungsbereich (8) die gleiche ist wie in den übrigen von dem Hohlraum (6) durchsetzten Bereichen der Kolbenstange (5).

3. Kolbenstangen-Einheit (1) nach Anspruch 1 oder 2, **dadurch gekennzeichnet, dass** der Stopfen (7) zweigeteilt aufgebaut ist, wobei ein erster Teil (7a) des Stopfens (7) im Verbindungsbereich (8) zwischen der Kolbenstange (5) und dem Endstück (3, 4) angeordnet ist und ein zweiter Teil (7b) des Stopfens (7) in dem Endstück (3, 4) angeordnet ist.

4. Kolbenstangen-Einheit (1) nach einem der Ansprüche 1 bis 3, **dadurch gekennzeichnet, dass** das stangenaugenseitige Endstück (4) zwei seitlich abkragende Rohrstutzen (9, 10) aufweist, wobei der Stopfen (7, 7a, 7b) zwischen den Rohrstutzen (9, 10) in dem hier fortgebildeten Hohlraum (6) angeordnet ist.

5. Kolbenstangen-Einheit (1) für einen Hydraulikzylinder (2), mit
- wenigstens einem kolbenseitigen Endstück (3), und
- wenigstens einem stangenaugenseitigen Endstück (4),
- einer hohl ausgeführten Kolbenstange (5), die zwischen den Endstücken (3, 4) angeordnet ist, wobei sich ein in der Kolbenstange (5) gebildeter Hohlraum (6) zumindest bis in mindestens eines der Endstücke (3, 4) hinein erstreckt, wobei in den Hohlraum (6) ein Stopfen (7, 7a, 7b) eingesetzt ist, der die Kolbenstange (5) und / oder eines der Endstücke ein Endstück (3, 4) hohlraumseitig stützt wobei das stangenaugenseitige Endstück (4) zwei seitlich abkragende Rohrstutzen (9, 10) aufweist, wobei der Stopfen (7, 7a, 7b) zwischen den Rohrstutzen (9, 10) in dem hier fortgebildeten Hohlraum (6) angeordnet ist.

6. Kolbenstangen-Einheit (1) nach einem der vorhergehenden Ansprüche, **dadurch gekennzeichnet, dass** der Stopfen (7, 7a, 7b) eine Durchgangsbohrung (11) aufweist, durch die ein Gelenkbolzen (12) am stangenausgenseitigen Endstück (4) geführt ist.

7. Kolbenstangen-Einheit (1) nach einem der vorhergehenden Ansprüche, **dadurch gekennzeichnet, dass** der Stopfen (7, 7a, 7b) aus dem gleichen Material wie die Kolbenstange (5), vorzugsweise Stahl, besteht.

8. Kolbenstangen-Einheit (1) nach einem der Ansprüche 1 bis 6, **dadurch gekennzeichnet, dass** der Stopfen (7, 7a, 7b) zumindest teilweise aus Leichtmetall, vorzugsweise Aluminium, besteht.

9. Kolbenstangen-Einheit (1) nach einem der vorhergehenden Ansprüche, **dadurch gekennzeichnet, dass** mindestens ein ringförmiges Dichtungselement (13) eine Abdichtung zwischen dem Stopfen (7, 7a 7b) und einer Innenwand (14) des Hohlraums (6) bewirkt.

10. Kolbenstangen-Einheit (1) nach einem der vorhergehenden Ansprüche, **dadurch gekennzeichnet, dass** der Stopfen (7, 7a) über eine kopfseitige Verschraubung (15) an dem den Hohlraum (6) aufweisenden Endstück (3, 4) verschraubt ist.

11. Kolbenstangen-Einheit (1) nach einem der vorhergehenden Ansprüche, **dadurch gekennzeichnet, dass** der Stopfen (7, 7b) an einem im Hohlraum (5) gebildeten Absatz (16) abgestützt ist.

12. Hydraulikzylinder (2) mit einer Kolbenstangen-Einheit (1) nach einem der vorhergehenden Ansprüche.

13. Knickmast (17) eines Großmanipulators (18), insbesondere einer Autobetonpumpe, mit einer Mehrzahl von Mastsegmenten (19), wobei die Mastsegmente (19) an Knickgelenken (20) jeweils um Knickachsen gegenüber einem benachbarten Mastsegment (19) oder einem Schemel (21) verschwenkbar sind, wobei zumindest ein Hydraulikzylinder (2) nach Anspruch 12 eine Verschwenkungbewegung in zumindest einem Knickgelenk (20) bewirkt.

## Claims

1. Piston rod unit (1) for a hydraulic cylinder (2), comprising
- at least one piston-side end piece (3), and
- east one rod-eye-side end piece (4),
- a hollow piston rod (5), which is arranged between the end pieces (3, 4), wherein a cavity (6) formed in the piston rod (5) extends at least into at least one of the end pieces (3, 4), wherein a plug (7, 7a, 7b) is inserted into the cavity (6), which supports the piston rod (5) and/or one of the end pieces (3, 4) on the cavity side, wherein the plug (7, 7a, 7b) supports the piston rod (5) in a connection region (8) to one of the end pieces (3, 4) through which the cavity (6) extends, wherein a welded joint is formed in the connection region (8) between the piston rod (5) and one of the end pieces (3, 4),
**characterised in that** the plug (7, 7a, 7b) covers the region of the weld joint on the cavity side when viewed in the axial direction of the piston rod (5).

2. Piston rod unit (1) according to claim 1, **characterised in that** the wall thickness (d) of the piston rod (5) in the connection region (8) supported by the plug (7, 7a, 7b) is the same as in the other regions of the piston rod (5) which the cavity (6) penetrates.

3. Piston rod unit (1) according to claim 1 or 2, **characterised in that** the plug (7) is constructed in two parts, wherein a first part (7a) of the plug (7) is arranged in the connection region (8) between the piston rod (5) and the end piece (3, 4) and a second part (7b) of the plug (7) is arranged in the end piece (3, 4).

4. Piston rod unit (1) according to any of claims 1 to 3, **characterised in that** the rod-eye-side end piece (4) comprises two laterally projecting pipe sockets (9, 10), wherein the plug (7, 7a, 7b) is arranged between the pipe sockets (9, 10) in the cavity (6) continued here.

5. Piston rod unit (1) for a hydraulic cylinder (2), comprising
- at least one piston-side end piece (3), and
- at least one rod-eye-side end piece (4),
- a hollow piston rod (5), which is arranged between the end pieces (3, 4), wherein a cavity (6) formed in the piston rod (5) extends at least into at least one of the end pieces (3, 4), wherein a plug (7, 7a, 7b) is inserted into the cavity (6), which supports the piston rod (5) and/or one of the end pieces an end piece (3, 4) on the cavity side,
wherein the rod-eye-side end piece (4) comprises two laterally projecting pipe sockets (9, 10), wherein the plug (7, 7a, 7b) is arranged between the pipe sockets (9, 10) in the cavity (6) continued here.

6. Piston rod unit (1) according to any of the preceding claims, **characterised in that** the plug (7, 7a, 7b) comprises a through-hole (11), through which a hinge pin (12) on the rod-eye-side end piece (4) is guided.

7. Piston rod unit (1) according to any of the preceding claims, **characterised in that** the plug (7, 7a, 7b) is made of the same material as the piston rod (5), preferably steel.

8. Piston rod unit (1) according to any of claims 1 to 6, **characterised in that** the plug (7, 7a, 7b) is made of light metal, preferably aluminium, at least in part.

9. Piston rod unit (1) according to any of the preceding claims, **characterised in that** at least one annular sealing element (13) brings about sealing between the plug (7, 7a, 7b) and an inner wall (14) of the cavity (6).

10. Piston rod unit (1) according to any of the preceding claims, **characterised in that** the plug (7, 7a) is screwed to the end piece (3, 4) comprising the cavity (6) via a head-side screw connection (15).

11. Piston rod unit (1) according to any of the preceding claims, **characterised in that** the plug (7, 7b) is supported on a shoulder (16) formed in the cavity (5).

12. Hydraulic cylinder (2) comprising a piston rod unit (1) according to any of the preceding claims.

13. Articulated boom (17) of a large manipulator (18), in particular of an auto concrete pump, comprising a plurality of boom segments (19), wherein the boom segments (19) are each pivotable at articulated joints (20) about articulation axes relative to an adjacent boom segment (19) or a turntable (21), wherein at least one hydraulic cylinder (2) according to claim 12 brings about a pivoting movement in at least one articulated joint (20).

## Revendications

1. Unité de tige de piston (1) pour un vérin hydraulique (2), avec
- au moins une pièce d'extrémité (3) du côté du piston et
- au moins une pièce d'extrémité (4) du côté de l'œil de la tige,
- une tige de piston (5) réalisée creuse, qui est agencée entre les pièces d'extrémité (3, 4), une cavité (6) formée dans la tige de piston (5) s'étendant au moins jusque dans au moins l'une des pièces d'extrémité (3, 4), un bouchon (7, 7a, 7b) étant inséré dans la cavité (6), lequel soutient la tige de piston (5) et/ou l'une des pièces d'extrémité (3, 4) du côté de la cavité,
le bouchon (7, 7a, 7b) soutenant la tige de piston (5) dans une zone de liaison (8) avec l'une des pièces d'extrémité (3, 4), à travers laquelle s'étend la cavité (6), une liaison soudée étant formée dans la zone de liaison (8) entre la tige de piston (5) et l'une des pièces d'extrémité (3, 4),
**caractérisée en ce que** le bouchon (7, 7a, 7b) recouvre la zone de la liaison soudée du côté de la cavité, vu dans la direction axiale de la tige de piston (5).

2. Unité de tige de piston (1) selon la revendication 1, **caractérisée en ce que** l'épaisseur de paroi (d) de la tige de piston (5) dans la zone de liaison (8) soutenue par le bouchon (7, 7a, 7b) est la même que dans les autres zones de la tige de piston (5) traversées par la cavité (6).

3. Unité de tige de piston (1) selon la revendication 1 ou 2, **caractérisée en ce que** le bouchon (7) est construit en deux parties, une première partie (7a) du bouchon (7) étant agencée dans la zone de liaison (8) entre la tige de piston (5) et la pièce d'extrémité (3, 4) et une deuxième partie (7b) du bouchon (7) étant agencée dans la pièce d'extrémité (3, 4).

4. Unité de tige de piston (1) selon l'une quelconque des revendications 1 à 3, **caractérisée en ce que** la pièce d'extrémité (4) du côté de l'œil de la tige présente deux tubulures (9, 10) faisant saillie latéralement, le bouchon (7, 7a, 7b) étant agencé entre les tubulures (9, 10) dans la cavité (6) qui s'y poursuit.

5. Unité de tige de piston (1) pour un vérin hydraulique (2), avec
- au moins une pièce d'extrémité (3) du côté du piston, et
- au moins une pièce d'extrémité (4) du côté de l'œil de la tige,
- une tige de piston (5) réalisée creuse, qui est agencée entre les pièces d'extrémité (3, 4), une cavité (6) formée dans la tige de piston (5) s'étendant au moins jusque dans au moins l'une des pièces d'extrémité (3, 4), un bouchon (7, 7a, 7b) étant inséré dans la cavité (6), lequel soutient la tige de piston (5) et/ou l'une des pièces d'extrémité (3, 4) du côté de la cavité,
la pièce d'extrémité (4) du côté de l'œil de la tige présentant deux tubulures (9, 10) faisant saillie latéralement, le bouchon (7, 7a, 7b) étant agencé entre les tubulures (9, 10) dans la cavité (6) qui s'y poursuit.

6. Unité de tige de piston (1) selon l'une quelconque des revendications précédentes, **caractérisée en ce que** le bouchon (7, 7a, 7b) présente un trou traversant (11) à travers lequel un goujon d'articulation (12) est guidé sur la pièce d'extrémité (4) du côté de l'œil de la tige.

7. Unité de tige de piston (1) selon l'une quelconque des revendications précédentes, **caractérisée en ce que** le bouchon (7, 7a, 7b) est constitué du même matériau que la tige de piston (5), de préférence d'acier.

8. Unité de tige de piston (1) selon l'une quelconque des revendications 1 à 6, **caractérisée en ce que** le bouchon (7, 7a, 7b) est au moins partiellement constitué de métal léger, de préférence d'aluminium.

9. Unité de tige de piston (1) selon l'une quelconque des revendications précédentes, **caractérisée en ce qu'**au moins un élément d'étanchéité annulaire (13) assure une étanchéité entre le bouchon (7, 7a, 7b) et une paroi intérieure (14) de la cavité (6).

10. Unité de tige de piston (1) selon l'une quelconque des revendications précédentes, **caractérisée en ce que** le bouchon (7, 7a) est vissé à la pièce d'extrémité (3, 4) présentant la cavité (6) par l'intermédiaire d'un vissage (15) du côté de la tête.

11. Unité de tige de piston (1) selon l'une quelconque des revendications précédentes, **caractérisée en ce que** le bouchon (7, 7b) est soutenu sur un épaulement (16) formé dans la cavité (5).

12. Vérin hydraulique (2) avec une unité de tige de piston (1) selon l'une quelconque des revendications précédentes.

13. Mât articulé (17) d'un grand manipulateur (18), notamment d'une pompe à béton automotrice, avec une pluralité de segments de mât (19), les segments de mât (19) pouvant pivoter au niveau de joints articulés (20) respectivement autour d'axes d'articulation par rapport à un segment de mât (19) voisin ou à une sellette (21), au moins un vérin hydraulique (2) selon la revendication 12 provoquant un mouvement de pivotement dans au moins un joint articulé (20).
